# EUROPÄISCHE PATENTSCHRIFT

(11) **EP 1 464 464 B1**
(45) Veröffentlichungstag und Bekanntmachung des Hinweises auf die Patenterteilung: **22.09.2010**
(21) Anmeldenummer: 04005550.1
(22) Anmeldetag: 09.03.2004
(51) Int. Cl.: B29C 44/36, B29C 44/46, C08J 9/12

(54) **Verfahren und Vorrichtung zur Herstellung von Polyurethan-Schaumstoffen**
Process and apparatus for the preparation of polyurethane foams
Procédé et appareil pour la préparation de mousses de polyuréthane

(30) Priorität: 18.03.2003 DE 10311768
(43) Veröffentlichungstag der Anmeldung: 06.10.2004
(73) Patentinhaber: Hennecke GmbH, 51379 Leverkusen (DE)
(72) Erfinder: Schamberg, Martin, 53757 Sankt Augustin (DE); Raffel, Reiner, 53721 Siegburg (DE); Wirth, Jürgen, 51147 Köln (DE)
(74) Vertreter: Gosdin, Michael

(56) Entgegenhaltungen:
- EP-A- 0 373 409
- WO-A-02/04190
- WO-A-96/00644
- DE-A1- 2 916 232

## Beschreibung

Die vorliegende Erfindung betrifft ein Verfahren gemäß Anspruch 1 und eine Vorrichtung gemäß Anspruch 12 zum Herstellen von Schaumstoffen, insbesondere Polyurethan-Schaumstoffen, aus mindestens zwei miteinander reagierenden flüssigen Reaktionskomponenten, wobei mindestens einer dieser Reaktionskomponenten Füllstoffe und mindestens einer dieser Reaktionskomponenten flüssiges CO₂ als physikalisches Treibmittel beigemischt werden.

Verfahren zum Schäumen unter Einsatz von CO₂ als physikalischem Treibmittel werden z.B. in EP-A-0767728, EP-A-0794 857 und in EP-A-0645226 beschrieben. Allen Verfahren ist gemeinsam, dass eine gelöstes CO₂ enthaltende Reaktivmischung durch relativ enge, z. B. runde oder längliche Öffnungen gefahren wird, wobei der dabei erzeugte Drucksprung dafür sorgt, dass das gelöste CO₂ aus dem gelösten in den gasförmigen Zustand übergeht.

Es hat sich gezeigt, dass dabei u.a. folgende zwei wesentliche physikalische Randbedingungen bzw. Regeln einzuhalten sind, um einen störungsfreien Schaum zu produzieren:
- Die Entspannung des CO₂ enthaltenden Reaktivgemisches auf Umgebungsdruck muss innerhalb einer sehr kurzen Zeitspanne vollzogen werden. Die schnell wachsenden Zellen dürfen keinen größeren mechanischen Belastungen mehr ausgesetzt werden, wenn sie eine bestimmte Größe überschritten haben. Läuft der Enspannungprozess zu langsam ab, sind die Zellen den notwendigerweise auftretenden relativ hohen Schergeschwindigkeiten im Entspannungsorgan noch in einem Stadium ausgesetzt, in dem sie bereits zu groß und damit zu empfindlich sind.
- Das frothartige Gemisch muss nach der Entspannung auf Atmosphärendruck innerhalb möglichst kurzer Zeit eine möglichst einheitliche Geschwindigkeit aufweisen. Das bedeutet, dass die Geschwindigkeitsspitzen, die im Entspannungsorgan zwangsläufig auftreten, möglichst schnell abgebaut werden müssen. Der Hintergrund ist auch hier wieder darin zu sehen, dass die schnell wachsenden Zellen möglichst geringen mechanischen Belastungen ausgesetzt werden. Dazu ist es notwendig, dass die für den Abbau der Geschwindigkeitsspitzen verantwortlichen Zähigkeitskräfte möglichst groß im Vergleich zu der Impulskraft des aus dem Entspannungsorgan austretenden Reaktionsgemisches sind.

Beide Randbedingungen sind prinzipiell am besten einzuhalten, wenn das CO₂ enthaltende Reaktionsgemisch in einem Düsenfeld bestehend aus möglichst vielen, möglichst feinen runden Löchern entspannt wird. Bei keiner anderen geometrischen Anordnung ist der Zusammenhang zwischen Druckabbau, Druckabbauzeit und Geschwindigkeitsabbau günstiger in Bezug auf die oben genannten Kriterien.

Vor diesem Hintergrund stellt die Verarbeitung von Füllstoffen bei der Herstellung von Polyurethan-Schaumstoffen mit CO₂ als Treibmittel eine große Herausforderung dar. Der Feinheit der Löcher werden abhängig vom Korngrößenspektrum des zu verarbeitenden Füllstoffes Grenzen gesetzt, damit die feinen Öffnungen sich auch bei stundenlangem Betrieb nicht zusetzen können. Ein geeignetes Verfahren sollte deshalb
1. den Einsatz eines Entspannungsorgans mit möglichst feinen Öffnungen erlauben, welche möglichst nah an das Korngrößenspektrum des zu verarbeitenden Füllstoffes heranreichen, ohne dadurch die Produktionssicherheit zu gefährden;
2. mit dieser gegebenen Grenze bezüglich der Feinheit der Öffnungen durch geeignete Prozessführung und insbesondere auch durch geeignete Gestaltung des Entspannungsorgans so weit wie möglich die oben aufgeführten Kriterien, insbesondere eine schnelle Entspannung und der Abbau der Geschwindigkeitsspitzen, einhalten. Je besser dies gelingt, desto höher ist der CO₂-Anteil, der vom Prozess beherrscht werden kann.

WO-A-02/04190 lehrt ein Verfahren, gemäß dem Oberbegriff des Anspruchs 1 und eine Vorrichtung gemäß der Oberbegriff dem Anspruchs 12 zur Herstellung von Polyurethan-Schaumstoff unter Einsatz von CO2 als Treibmittel und Beigabe von Füllstoffen, bei dem Agglomerate aus dem eingesetzten Füllstoff vor dem Eintritt in das Austragsorgan zerkleinert werden. In dem Verfahren gemäß WO-A-02/04190 ist auch eine Filtration des vorab hergestellten Polyol-Füllstoff-Gemisches vorgesehen, allerdings wird die Art der Filterung, welche ganz wesentlich für den Prozess ist, nicht näher ausgeführt.

Die Erfindung betrifft ein Verfahren zur kontinuierlichen Herstellung von Polyurethan-Schaumstoffen unter Einsatz von CO₂ als Treibmittel sowie unter Beigabe von Füllstoffen gemäß Anspruch 1.

Geeignete Füllstoffe sind z.B. Melamin, Calciumcarbonat-Pulver, Graphitpulver, Recyclingpulver. Bevorzugt werden Melamin und Calciumcarbonatpulver eingesetzt.

Je geringer die maximale Korngröße der Partikel ist, die das Austragsorgan passieren müssen, desto feiner können die Lochquerschnitte gewählt werden. Zuverlässig begrenzen lässt sich die maximale Korngröße, die das Austragsorgan erreicht, bei gegebenem Füllstoff und bei gegebener Korngrößenverteilung nur durch eine geeignete Filterung. Die Filterfeinheit sollte dabei möglichst nahe an das Komspektrum heranreichen oder gegebenenfalls auch innerhalb des Komspektrums liegen.

Es hat sich dabei gezeigt, dass die Löcher der Siebe im Austragsorgan auch durch mehrere Überkörner, die in allen Dimensionen deutlich kleiner sind als die Sieblöcher selbst, verstopfen können, wenn diese gleichzeitig eine Öffnung durchströmen und sich dabei ineinander verkeilen. Deshalb muss die statistische Wahrscheinlichkeit für diesen Fall so weit reduziert werden, dass er auch bei stundenlangem Betrieb praktisch nicht auftritt. Es hat sich gezeigt, dass die Filterfeinheit dafür idealerweise so fein gewählt werden muss, dass bei runden Sieblöchern drei Partikel und bei länglichen Sieblöchern zwei Partikel gleichzeitig in jeder beliebigen Anordnung eine Öffnung passieren können.

Diese Notwendigkeit lässt sich auch durch eine theoretische Betrachtung leicht nachvollziehen. Wenn man sich vergegenwärtigt, dass bei Einsatz von 20 kg CaCO₃ pro Minute mit einer durchschnittlichen Partikelgröße von ca. 3 µm eine Partikelmenge in der Größenordnung von 10¹⁹ Partikeln pro Sekunde verarbeitet wird, dann wird deutlich, dass selbst bei kritischen Überkornanteilen im ppm-Bereich die statistische Wahrscheinlichkeit dafür, dass mehrere solcher Überkörner gleichzeitig ein Loch durchströmen, keinesfalls vernachlässigbar klein ist. Zu berücksichtigen ist dabei, dass bei solchen handelsüblichen Kreiden mit einer durchschnittlichen Partikelgröße unterhalb 3 µm ein Anteil bis zu 0,1% mit einer Korngröße oberhalb von 45 µm vorhanden ist. Das bedeutet bezüglich des oben aufgeführten Beispiels immerhin eine Überkornfracht von deutlich über 1000 Partikeln pro Sekunde mit einer Partikelgröße oberhalb 45 µm.

Deshalb werden die Öffnungen der Siebe so dimensioniert, dass sie mindestens 1,2 mal bis maximal 10 mal so groß, in einer bevorzugten Ausführung 1,5 mal bis 5 mal und in einer besonders bevorzugten Ausführung 1,8 mal bis 4 mal so groß sind wie die Spalte bzw. Löcher der feinsten Filterstufe.

Aus den aufgeführten Zahlenbeispielen wird außerdem deutlich, dass es vorteilhaft ist, kontinuierlich abreinigbare Filter einzusetzen, um möglichst fein filtern zu können. Eine Fracht von mehr als 1500 Partikeln pro Sekunde bedeutet, dass pro Stunde über 5 Millionen Partikel abgefiltert werden müssen. Diese Menge steigt exponentiell an, je weiter die Filterfeinheit in das Komspektrum hineinreicht.

Als Filter kommen für diese Aufgabe z.B. Plattenspaltfilter, die mittels eines Kamms abgereinigt werden, oder Drahtspaltfilter und Spaltrohrfilter, die mittels Schabern abgereinigt werden, in Frage.

Ebenfalls geeignet sind Filterelemente aus einer Lochfolie, die auf einem zylinderförmigen Stützkörper angebracht ist und mit Hilfe eines Schabers abgereinigt wird.

Besonders vorteilhaft ist dabei eine Ausführung, bei der die Öffnungen der Lochfolie am Strömungseintritt möglichst scharfkantig gestaltet sind, damit die abgefilterten Partikel möglichst gut vom Schaber erfasst werden können, und sich diese Öffnungen dann zur Austrittseite erweitern. Damit ist eine gute mechanische Abreinigbarkeit und gleichzeitig ein minimaler Druckverlust dieser Filterelemente gewährleistet.

Desweiteren ist es vorteilhaft, dass zumindest in einer Filterstufe mit solchen zweidimensional wirkenden Filtern gefiltert wird. Eine eindimensionale Filterstufe kann von Partikeln, deren Ausdehnung in zwei Dimensionen deutlich oberhalb der Filterfeinheit liegt, passiert werden. Diese können dann trotz der feineren Filterung die Öffnungen des Austragsorgans blockieren.

Für eine optimierte Prozessführung ist es außerdem sehr vorteilhaft, wenn dieses zweidimensional filternde Element kontinuierlich oder zumindest in Zeitintervallen abgereinigt wird. Zu diesem Zweck eignen sich die oben bereits beschriebenen Lochfolien, mit z.B. runden, quadratischen oder hexagonalen Lochquerschnitten.

Vorteilhaft ist die Ausgestaltung der Filterstrecke als Filterkaskade, bestehend aus einem eindimensional filternden Element und einem zweidimensional filternden Element. Dabei sollte das eindimensionale filternde Element vorzugsweise zuerst durchströmt werden und etwas feinere Öffnungen haben als das zweidimensional filternde Element.

Es hat sich nämlich gezeigt, dass Filter mit länglichen Öffnungen, d.h. eindimensional wirkende Filterelemente, bei gleicher Filterfeinheit eine höhere Fracht (Partikel pro Zeiteinheit) an auszufilternden Überkörnern pro Filterfläche verarbeiten können als zweidimensional wirkende Filterelemente. Deshalb ist es vorteilhaft, wenn der eindimensional wirkende Filter die Hauptfracht der Überkörner beseitigt, und das folgende zweidimensional wirkende Filterelement im wesentlichen nur die Aufgabe hat, die länglichen Überkörner abzufiltern.

In dieser Kaskade sollte zumindest das feinere, eindimensional filternde Element kontinuierlich abgereinigt werden. Besser ist es aber, wenn beide Filter kontinuierlich abgereinigt werden, da die Filterfeinheiten in diesem Fall besser hinsichtlich des Komspektrums optimiert werden können.

Ein entscheidendes Kriterium für die Auswahl der Filterfeinheit ist die Partikelgrößenverteilung des zu verarbeitenden Füllstoffes. In den Korngrößenverteilungs-Diagrammen, die in der Regel zur Spezifizierung des Füllstoffes von den Herstellern der Füllstoffe erstellt werden, ist auf der Ordinate der prozentuale Anteil an Partikeln mit einer Partikelgröße, die unterhalb der auf der Abszisse aufgetragenen Partikelgrößen liegt, aufgetragen. Ermittelt werden diese Verteilungen heute in der Regel mittels Laserbeugungsspektroskopie, z.B. mit Geräten wie Cilas 920, Malvern 2600, etc. Dabei werden die Partikel mit monochromatischem Laserlicht bestrahlt. Die Strahlen werden von den Partikeln abhängig von ihrer Größe gebeugt und die Intensitätsverteilung des gebeugten Lichtes wird mit Hilfe eines geeigneten Detektors gemessen. Aus dieser Intensitätsverteilung des Lichtes lässt sich dann die Partikelgrößenverteilung ermitteln.

Da die bevorzugt eingesetzten Füllstoffe in der Regel ein relativ breit gestreutes Komgrößenspektrum aufweisen, ist eine genaue Spezifizierung der verwendeten Filterfeinheiten abhängig vom Korngrößenspektrum schwierig.

Einen Anhaltspunkt zur Auslegung der Filterfeinheit liefert jedoch der z.B. bei Calciumcarbonat-Pulvem häufig spezifizierte "obere Schnitt", d.h. der Partikeldurchmesser, der größer ist als 98 Gew.-% der Füllstoffpartikel. Dieser lässt sich für jeden Füllstoff aus der Komgrößenverteilungskurve ablesen.

Es hat sich gezeigt, dass die feinste Filterstufe um den Faktor 1 bis 10, bevorzugt um den Faktor 1,2 bis 7 und besonders bevorzugt um den Faktor 1,5 bis 5 gröber sein sollte als dieses Maß des oberen Schnitts.

Damit die Filterfeinheit so fein wie möglich auf das Korngrößenspektrum abgestimmt werden kann, ist es außerdem notwendig, dass der Füllstoff nahezu agglomeratfrei in der zu filternden Mischung vorliegt. Ansonsten wird selbst durch Agglomerate, die nur aus wenigen Partikeln bestehen, das Korngrößenspektrum im Bereich der oberen Partikelgrößen so ungünstig beeinflusst, dass die Filterstufen deutlich gröber gewählt werden müssten, um einen reibungslosen Prozessablauf zu gewährleisten.

Der Prozess muss dabei auch Füllstoffe zuverlässig verarbeiten können, die bereits vor der Einmischung im trockenen Zustand oder auch bedingt durch Luftfeuchtigkeit zur Klumpenbildung neigen und sich deshalb nur schwer vollständig benetzen lassen. Kommen derartige Agglomerate dann mit der Flüssigkeit, in die sie eingemischt werden sollten, in Kontakt so wird das Agglomerat außen mit der Flüssigkeit benetzt und bleibt zunächst innen trocken. Die Flüssigkeit muss dann im ungünstigsten Fall durch Kapillarkräfte in das Innere dieses Agglomerates eindringen und dabei noch die angelagerte Luft verdrängen. Eine vollständige Benetzung der einzelnen Partikel und ein vollständiger Aufschluss des Füllstoffes ist jedoch auf diese Weise ohne das Einbringen mechanischer Energie nicht zu erreichen.

Eine geeignete Methode zur Vermeidung bzw. zur Zerstörung von Agglomeraten besteht darin, die hochviskose Mischung hohen Schergeschwindigkeiten auszusetzen. Dafür wird die Mischung Schergeschwindigkeiten zwischen 10000 s⁻¹ und 200000 s⁻¹, bevorzugt von zwischen 20000 s⁻¹ und 150000 s⁻¹ und besonders bevorzugt von zwischen 30000 s⁻¹ und 100000 s⁻¹ ausgesetzt. Besonders geeignet sind zu diesem Zweck Vorrichtungen, die nach dem Rotor-Stator-Prinzip arbeiten. Ein schnelllaufender Rotor erzeugt in einem engen Spalt zwischen diesem Rotor und einem stehenden Stator sehr hohe Schergeschwindigkeiten und induziert damit Scherspannung in die Mischung, wodurch die Agglomerate aufgeschlossen werden und die einzelnen Partikel von der umgebenden Flüssigkeit benetzt werden können.

Eine andere Möglichkeit, die hohen Schergeschwindigkeiten zu erzielen, besteht im Verdüsen der Mischung, z.B. durch eine oder mehrere Lochblenden. Bei dieser Variante sind jedoch je nach Füllstoff Verdüsungsdrücke in der Größenordnung von 30 bis 200 bar erforderlich.

Vorteilhaft ist eine Zugabe des Füllstoffes nach dem in EP-A-373409 beschriebenen Verfahren. Dabei wird der Füllstoff mit Hilfe einer Stopfschnecke einem dosierten Flüssigkeitsstrom zugegeben. Der Füllstoff wird dabei unmittelbar nach der Zugabe in einem relativ kleinvolumigen Durchlaufmischer mit der Flüssigkeit vermischt und in Ergänzung zu dem in der EP-A-373409 beschriebenen Verfahren direkt im Anschluss hohen Schergeschwindigkeiten ausgesetzt. Vorteilhaft ist dabei, dass das Gemisch direkt hinter der kleinen Einmischzone durch ein Rotor-Stator-System so hohen Schergeschwindigkeiten ausgesetzt wird, dass ein nahezu vollständiger Aufschluss gewährleistet ist. Die von vornherein vollständige Benetzung aller Partikel und die direkte Verarbeitung des Gemisches verhindert dabei Absetzerscheinungen und die Bildung größerer, trockener unbenetzter Zonen im Leitungssystem.

Durch diese Maßnahmen (Erzielen einer nahezu agglomeratfreien Mischung und auf das Komspektrum angepasste, optimierte Filterung) wird erreicht, dass trotz des Füllstoffes relativ feine Öffnungen im Entspannungsorgan eingesetzt werden können.

Dennoch können diese je nach Füllstoffart gegebenenfalls wesentlich gröber sein als die ansonsten beim CO₂-Prozess verwendeten Öffnungen. Dies hat im wesentlichen folgenden nachteiligen Effekt:

Die Geschwindigkeiten, die notwendigerweise bei der Entspannung des CO₂-haltigen Reaktivgemisches erzeugt werden müssen, sind schwieriger zu beruhigen, d.h. die Geschwindigkeitsspitzen sind schwieriger abzubauen. Insbesondere verschlechtert sich das Verhältnis der Zähigkeitskräfte, die aufgrund des Geschwindigkeitsgradienten zum Abbau der Strahlimpulse führen, zu den Strahlimpulskräften deutlich. Die Folge davon ist, dass das Gemisch länger und damit in einem Stadium weit fortgeschrittenem Zellwachstums relativ großen Schubspannungen ausgesetzt ist, wodurch Störungen auftreten können, und dass insbesondere die nicht genügend abgebauten Strahlimpulse bei Umlenkungen des Frothgemisches regelrechte Einschusslöcher verursachen können.

Vor diesem Hintergrund wird es mit größer werdenden Öffnungen zunehmend wichtig, die Geschwindigkeitsspitzen der austretenden Strahlen zu begrenzen. Da jedoch hohe Geschwindigkeiten für einen plötzlichen Druckabbau notwendig sind, müssen diese hohen Geschwindigkeitsspitzen vor dem Austritt aus dem Entspannungsorgan sicher abgebaut werden.

Aus diesem Grund ist es notwendig das Gemisch in mehreren Stufen zu entspannen, wobei in den ersten Stufen unter Erzeugung hoher Schergeschwindigkeiten der plötzliche Druckabbau im wesentlichen erzielt wird und in wenigstens einer nachgeschalteten Stufe die dabei erzeugten Geschwindigkeitsspitzen sicher abgebaut werden. Dies wird z.B. durch den Einsatz von Sieben unterschiedlicher Offenheit ermöglicht.

Als sehr vorteilhaft hat es sich dabei erwiesen, wenn die Löcher der unteren Siebe konsequent versetzt zueinander angeordnet werden, so dass keinerlei Löcher von zwei hintereinander folgenden Sieben in Flucht zueinander liegen. Dadurch werden die Strahlen vor jedem Sieb zwangsweise umgelenkt, so dass die hohen Geschwindigkeitsspitzen vor dem Austritt aus dem Entspannungsorgan sicher abgebaut werden.

Die Erfindung betrifft auch eine Vorrichtung gemäß einem der Ansprüche 12 bis 24.

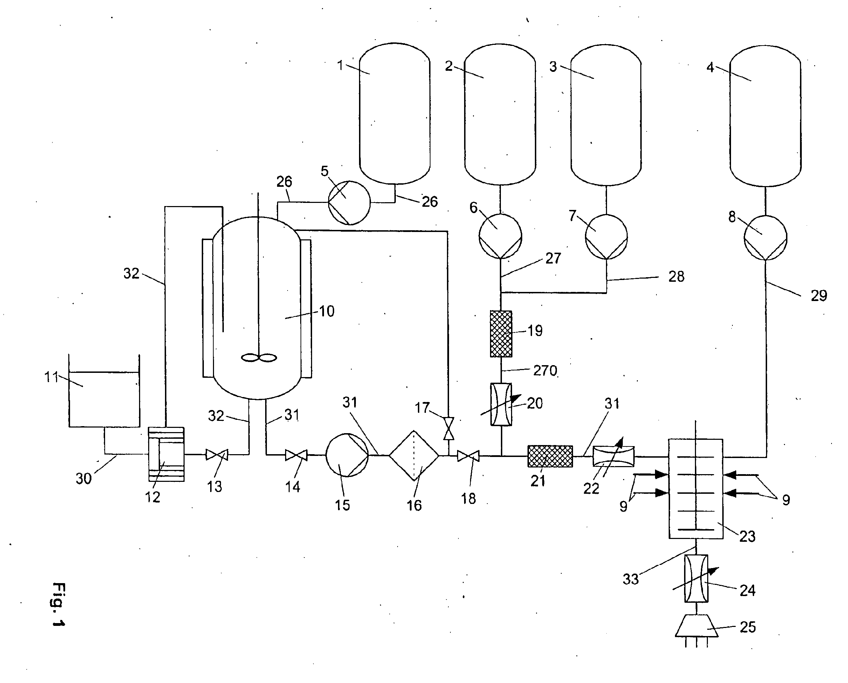

Im folgenden wird die Erfindung anhand der Figuren 1, 2 und 3 näher erläutert.

Es zeigen Figuren 1, 2 und 3 Vorrichtungen zur Herstellung von Polyurethan-Schaumstoff mit CO₂ als Treibmittel, bei der Füllstoff in eine der Reaktionskomponenten eingemischt wird.

In den drei Figuren sind jeweils 2 Polyolbehälter (1, 34, 65) für Polyol 1; und (2, 35, 66) für Polyol 2, ein Treibmittelbehälter (3, 36, 67) und ein Isocyanatbehälter (4, 37, 68) zur Bevorratung der Komponenten mit zugehörigen Förderpumpen (5, 38, 69 für Polyol 1; 6, 39, 70 für Polyol 2; 7, 40, 71 für das Treibmittel und 8, 41, 72 für Isocyanat) und mit zugehörigem Leitungssystem zum Transport dieser Komponenten (26, 58, 87 für Polyol 1; 27, 59, 88 für Polyol 2; 28, 60, 89 für das Treibmittel und 29, 61, 90 für Isocyanat) bis zum Hauptmischer (23, 55, 84) dargestellt.

Die Dosierlinien für die weiteren Additive (Behälter, Pumpen, Leitungen) werden durch die Pfeile (9, 42, 73) in den Hauptmischer symbolisiert.

Desweiteren enthalten alle Ausführungsbeispiele ein Vorrats- bzw. Aufnahmebehältnis für den Füllstoff (11, 44, 74), eine Zuleitung für den Füllstoff (30, 62) in das Leitungssystem für das Polyol 1 (26, 58, 87) sowie eine Gemischpumpe (15, 47, 78) zur Dosierung des Polyol/Füllstoff-Gemisches.

In allen Ausführungsbeispielen (Figuren 1 - 3) ist innerhalb des Leitungssystems des Polyolstrom für Polyol 1 (26, 58, 87) im Bereich von der Einmündung der Füllstoffzuleitung (30, 62) bis zum Hauptmischer (23, 55, 84), eine Vorrichtung zur Agglomeratzerkleinerung (12, 46, 77) installiert.

Außerdem ist in diesem Leitungsabschnitt (31, 63, 92) jeweils ein Filter (16, 48, 79) dargestellt, durch den die füllstoffhaltige Mischung gefahren wird. Dabei kann es sich auch um mehrere parallel geschaltete Filterlinien mit mehreren in Reihe geschalteten Filtern handeln. Dabei ist der Einsatz kontinuierlich abreinigbarer Filter vorteilhaft.

Das Treibmittel wird jeweils zunächst einem zweiten Polyolstrom zugegeben und mit Hilfe eines Statikmischers (19, 51, 80) und einer einstellbaren Drossel (20, 52, 81) unter Druck in diesem Polyolstrom in Lösung gebracht. Der Druck ist dabei mit Hilfe der einstellbaren Drossel (20, 52, 81) so einzustellen, dass das Treibmittel bei Erreichen der Drossel möglichst vollständig gelöst ist.

Diese Treibmittel-haltige Lösung wird dann mit Hilfe eines weiteren Statikmischers (21, 53, 82) und einer weiteren einstellbaren Drossel (22, 54, 83) unter Druck mit der füllstoffhaltigen Mischung vermischt. Dabei ist der Druck mit Hilfe der Drossel (22, 54 und 83) so einzustellen, dass das Treibmittel möglichst vollständig gelöst bleibt.

Anschließend wird das Füllstoff- und CO₂-haltige Gemisch im Hauptmischer (23, 55, 84) mit dem Isocyanat und den Additiven vermischt und über eine Leitung (33, 64, 93) für die Füllstoff- und Treibmittel-haltige Reaktivmischung (33, 64, 93) dem Austragsorgan (25, 57, 86) zugeführt.

Im Austragsorgan (25, 57, 86), welches mit mindestens einem feinmaschigen Sieb bestückt ist, erfolgt der kontrollierte Druckabbau der Reaktivmischung unter Aufteilung der Mischung in eine Vielzahl von Einzelströmen bei Schergeschwindigkeiten oberhalb 500 s⁻¹.

Zwischen dem Hauptmischer (23, 55, 84) und dem Austragsorgan (25, 57, 86) ist ein weiteres einstellbares Drosselorgan (24, 56, 85) in die Leitung für das Reaktivgemisch (33, 64, 93) integriert.

Die Unterschiede der in den 3 Figuren dargestellten Verfahren liegt in der Art der Zugabe und der Beimischung des Füllstoffes und wird im folgenden näher erläutert.

In Figur 1 ist zwischen dem Vorratsbehälter für Polyol 1 (1) und der Gemischpumpe (15) ein Batchbehälter (10) mit einer kleinen Kreislaufleitung (32) eingebaut. Zunächst wird die gewünschte Menge Polyol über die Förderpumpe (5) in den Batchbehälter (10) gefördert. Innerhalb der kleinen Kreislaufleitung (32) ist eine besondere Ausführungsform des Agglomeratzerkleinerers (12) mit 2 Eingängen und einem Ausgang installiert. Mit Hilfe dieser Vorrichtung wird das Polyol bzw. das Gemisch über das dabei geöffnete Absperrventil (13) im Kreislauf aus dem Batchbehälter (10) gefahren, wobei gleichzeitig der Füllstoff über die Füllstoffzuleitung (30) aus dem Behältnis zur Aufnahme bzw. zur Bevorratung des Füllstoffs (11) angesaugt wird und wobei die vorhandenen Agglomerate in dieser Vorrichtung direkt von einem Rotor-Stator-System zerkleinert und aufgeschlossen werden. Dies wird solange fortgesetzt, bis die Mischung im Rührwerksbehälter (10) das gewünschte Mischungsverhältnis aufweist.

Anschließend kann die Mischung mit Hilfe der Gemischpumpe (15) bei geöffnetem Absperrventil (14) entweder über das geöffnete Absperrventil (17) im Kreislauf konditioniert werden oder über das geöffnete Absperrventil (18) dem Hauptmischer zugeführt werden.

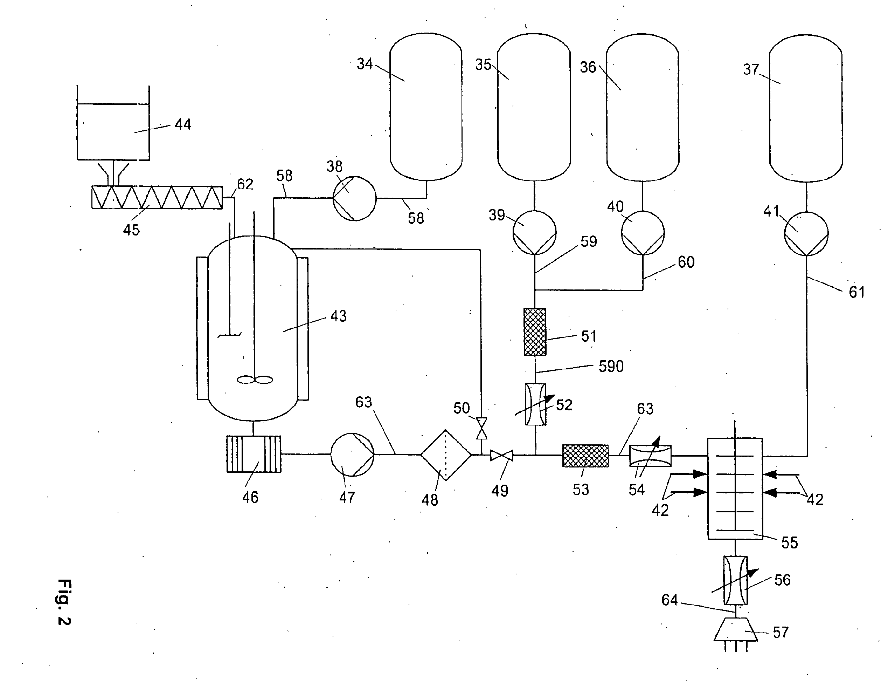

In Figur 2 ist zwischen dem Vorratsbehälter für Polyol 1 (34) und der Gemischpumpe (47) wiederum ein Rührwerksbehälter (43) eingebaut. Zunächst wird die gewünschte Menge Polyol über die Förderpumpe (38) in den Rührwerksbehälter (43) gefördert. Anschließend wird über eine Speiseschnecke (45) der Füllstoff aus dem Behältnis zur Aufnahme oder Bevorratung des Füllstoffs (44) in den Rührwerksbehälter (43) gefördert, bis das gewünscht Mischungsverhältnis erreicht ist. Dabei sollte dieses Einmischen von geeigneten Rührwerken unterstützt werden.

Anschließend kann die Mischung wiederum mit Hilfe der Gemischpumpe (47) entweder über das geöffnete Absperrventil (50) im Kreislauf konditioniert werden oder über das geöffnete Absperrventil (49) dem Hauptmischer zugeführt werden. Dabei ist die Vorrichtung zur Agglomeratzerkleinerung (46) zwischen dem Rührwerksbehälter (43) und der Gemischpumpe (47) angeordnet. Die Vorrichtung zur Agglomeratzerkleinerung (46) basiert auf dem Rotor-Stator-Prinzip und dient wegen ihrer Fördereigenschaften gleichzeitig als Versorgungspumpe für die Gemischpumpe (47).

Als Alternative wäre auch der Einsatz einer oder mehrerer Düsen zum Zweck der Agglomeratzerkleinerung denkbar, wobei diese dann aber hinter der Gemischpumpe installiert werden müssten.

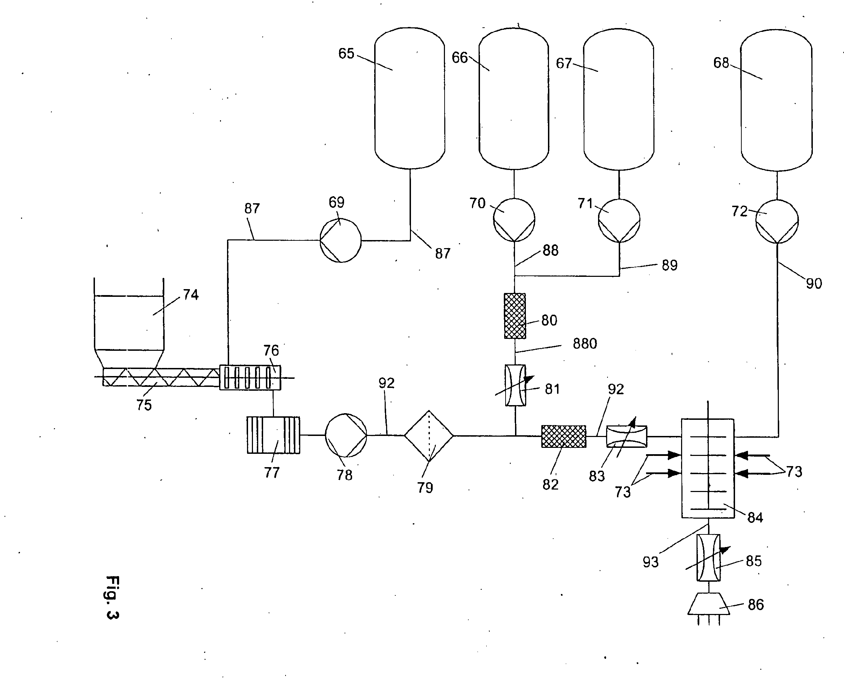

Figur 3 zeigt eine Variante des Verfahrens, bei der der Füllstoff in der in EP-A-373409 beschriebenen Weise kontinuierlich und dosiert dem Polyol 1 zugegeben wird und bei der die Mischung anschließend direkt dem Hauptmischer (84) zugeführt wird. Das Verfahren beruht auf einer Kombination einer Differenzdosierung, die durch Einstellen unterschiedlicher Fördervolumina in der Polyolpumpe (69) und der Gemischpumpe (78) erreicht wird, und dem hier nicht näher dargestellten Regelmechanismus, bei der der Druck in dem Vormischer (76) gemessen und über die Drehzahl der Verdichtungsschnecke (75) konstant gehalten wird. Während das in den Pumpen eingestellte Differenzvolumen eine volumendosierte Zugabe des Füllstoffes ermöglicht, sichert der konstante Druck im Vormischer (76) eine nahezu konstante Packungsdichte des Füllstoffes, wodurch insgesamt eine mengendosierte Zugabe des Füllstoffes erzielt wird. Direkt im Anschluss an den Vormischer (76) wird diese Mischung durch eine Vorrichtung zur Agglomeratzerkleinerung (77) gefahren, welche auf dem Rotor-Stator-Prinzip beruht.

Als Alternative wäre auch hier der Einsatz einer oder mehrerer Düsen zum Zweck der Agglomeratzerkleinerung denkbar, wobei diese dann aber wiederum hinter der Gemischpumpe zu installieren sind.

## Patentansprüche

1. Verfahren zur kontinuierlichen Herstellung von PolyurethanSchaumstoffen unter Einsatz von CO₂ als Treibmittel sowie unter Beigabe von Füllstoffen, wobei
(a) der Füllstoff mindestens einer der Reaktivkomponenten Polyol oder Isocyanat bzw. einer Teilmenge einer der Reaktivkomponenten beigemischt wird und wobei entweder direkt bei der Einmischung oder im Anschluss an die Beimischung des Füllstoffes diese Mischung Schergeschwindigkeiten von zwischen 10.000 s⁻¹ und 200.000 s⁻¹ ausgesetzt wird, wodurch ein nahezu vollständiger Aufschluss des Füllstoffes in der Reaktivkomponente erreicht wird, so dass anschließend eine nahezu agglomeratfreie Mischung vorliegt, und
(b) diese Füllstoff enthaltende Mischung durch ein Filter (16, 48, 79) gefahren wird, und Überkörner, Restagglomerate und/oder Verunreinigungen abfiltriert werden, und
(c) das CO₂ einer der Reaktivkomponenten bzw. einem Teilstrom einer der Reaktivkomponenten oder der Füllstoff enthaltenden Mischung unter Druck zugegeben wird, unter Erzeugung einer flüssiges CO₂ enthaltenden Mischung bzw. einer flüssiges CO₂ und Füllstoff enthaltenden Mischung, und
(d) die CO₂ enthaltende Mischung und die Füllstoff enthaltende Mischung bzw. die flüssiges CO₂ und Füllstoff enthaltende Mischung mit der anderen Reaktivkomponente und gegebenenfalls weiteren Zusatzstoffen vermischt und die CO₂ und Füllstoff enthaltende Reaktivmischung anschließend unter Aufteilung in eine Vielzahl von Einzelströmen bei Schergeschwindigkeiten oberhalb 500 s⁻¹ entspannt wird und die dabei erzeugten Strömungsgeschwindigkeiten vor dem Austrag reduziert werden, und
(e) das Reaktivgemisch auf ein Substrat aufgetragen wird und zu einem Polyurethan-Schaumstoff aushärtet, **dadurch gekennzeichnet, dass** der Filter (16, 48, 79) eine Filterkaskade ist, bestehend wenigstens aus einem eindimensional filternden Element und einem zweidimensionalen filternden Element aus einer Lochfolie mit runden, quadratischen oder hexagonalen Lochquerschnitten, wobei beide Elemente zumindest in Zeitintervallen mechanisch abgereinigt werden, wobei das zweidimensional filternde Element stromabwärts des eindimensional filternden Elements angeordnet ist und wobei das eindimensional filternde Element feinere Öffnungen hat als das zweidimensional filternde Element.

2. Verfahren nach Anspruch 1, wobei zumindest eines der zur Filterung der Füllstoff enthaltenden Mischung eingesetzten Filter (16, 48, 79) kontinuierlich mechanisch abgereinigt wird.

3. Verfahren nach Anspruch 2, wobei das zweidimensional filternde Filter (16, 48, 79) kontinuierlich mechanisch abgereinigt wird.

4. Verfahren nach einem der Ansprüche 1 bis 3, wobei die feinste Filterstufe um den Faktor 1 bis 10, bevorzugt um den Faktor 1.2 bis 7 und besonders bevorzugt um den Faktor 1.5 bis 5 gröber ist als das Maß des oberen Schnittes.

5. Verfahren nach einem der Ansprüche 1 bis 4, wobei die CO₂ enthaltende Mischung und die Füllstoff enthaltende Mischung vor der Vermischung mit der anderen Reaktivkomponente miteinander vermischt werden.

6. Verfahren nach einem der Ansprüche 1 bis 5, wobei der Druck der CO₂ und Füllstoff enthaltenden Mischung abgesenkt wird.

7. Verfahren nach einem der Ansprüche 1 bis 6, wobei der Druck der Reaktivmischung vor Eintritt in das Austragsorgan mit Hilfe eines einstellbaren Drosselorgans (24, 56, 85) abgesenkt wird.

8. Verfahren nach einem der Ansprüche 1 bis 7, wobei der Füllstoff mittels einer Speiseschnecke kontinuierlich einem Vormischer zugeführt und dort mit der Reaktivkomponente vermischt wird, wobei der Druck in dieser Vormischzone nahezu konstant gehalten wird.

9. Verfahren nach einem der Ansprüche 1 bis 7, wobei der Füllstoff durch Unterdruck in die Reaktivkomponente eingesaugt wird.

10. Verfahren nach einem der Ansprüche 8 oder 9, wobei der Füllstoff vor der Vermischung mit der Reaktivkomponente mit CO₂ geflutet wird, so dass zumindest ein Teil der den Füllstoff umgebenden Luft durch CO₂ substituiert wird.

11. Verfahren nach einem der Ansprüche 1 bis 10, wobei der Füllstoff vor der Einmischung in eine der Reaktivkomponenten vorgesiebt wird.

12. Vorrichtung zur kontinuierlichen Herstellung von PolyurethanSchaumstoffen enthaltend Vorratsbehälter (1, 2 ,3 ,4 ;34, 35, 36, 37; 65, 66, 67, 68) und Fördereinrichtungen (5,6,7,8; 38, 39, 40, 41; 69, 70, 71, 72) für die Komponenten Isocyanat, Polyole, Additive und flüssiges Kohlendioxid, einen Hauptmischer (23; 55; 84) zur Vermischung der Isocyanatkomponente und der Polyolkomponenten sowie Leitungen zwischen den Vorratsbehältern (1, 2 ,3 ,4 ;34, 35, 36, 37; 65, 66, 67, 68) und dem Hauptmischer (23; 55, 84), sowie zumindest ein Behältnis zur Aufnahme oder Bevorratung des Füllstoffes (11; 44; 74), eine Vorrichtung zur Beimischung des Füllstoffs (10; 43; 76) in die Isocyanat- oder die Polyolkomponente und eine Vorrichtung zur Agglomeratzerkleinerung (12, 46, 77),
(a) wobei die Leitung (31, 63, 92) zum Transport des füllstoffhaltigen Gemisches zumindest einen Filter (16, 48, 79) enthält, und
(b) wobei in mindestens eine von einem der Vorratsbehälter (2; 35; 66) für die Isocyanat- oder die Polyolkomponente zum Hauptmischer (23; 55; 84) führende Leitung (27; 59; 88) eine vom CO₂-Vorratsbehälter (3; 36; 67) kommende Zuleitung (28; 60; 89) einmündet und wobei in dem Leistungsabschnitt (270; 590; 880) zwischen dieser Einmündung und dem Hauptmischer (23; 55; 84) eine Mischvorrichtung (19; 51; 80) zum Einmischen und Lösen des CO₂ in die Reaktionskomponente angeordnet ist, und
(c) wobei dem Hauptmischer (23; 55; 84) ein einen Drucksprung erzeugendes Austragsorgan (25; 57; 86) nachgeordnet ist, welches wenigstens ein feinmaschiges Sieb enthält,
**gekennzeichnet dadurch, dass** der Filter eine Filterkaskade (16; 48, 79) ist, bestehend aus einem eindimensional filterndem Element und einem zweidimensional filternden Element aus einer Lochfolie mit runden, quadratischen oder hexagonalen Lochquerschnitten, wobei beide Elemente zumindest in Zeitintervallen mechanisch abgereinigt werden, wobei das zweidimensional filternde Element stromabwärts des eindimensional filternden Elements angeordnet ist und wobei das eindimensional filternde Element feinere Öffnungen als das zweidimensional filternde Element hat.

13. Vorrichtung nach Anspruch 12, wobei die Vorrichtung zur Agglomeratzerkleinerung (12; 46; 77) auf dem Rotor-Stator-Prinzip basiert.

14. Vorrichtung nach Anspruch 12, wobei die Vorrichtung zur Agglomeratzerkleinerung (12; 46; 77) mindestens eine Düse oder Lochblende enthält.

15. Vorrichtung nach einem der Ansprüche 11 bis 14, wobei zumindest ein Filter (16; 48; 79) eine Vorrichtung zur mechanischen Abreinigung enthält.

16. Vorrichtung nach Anspruch 15, wobei zumindest ein Filter (16; 48; 79) einen kontinuierlichen Antrieb für die mechanische Abreinigung enthält.

17. Vorrichtung nach Anspruch 12, wobei zumindest ein Filter (16; 48; 79) mit zweidimensional filterndem Filterelement eine Vorrichtung zur mechanischen Abreinigung enthält.

18. Vorrichtung nach Anspruch 17, wobei zumindest ein Filter (16; 48; 79) mit zweidimensional filterndem Filterelement und mit Vorrichtung zur mechanischen Abreinigung einen kontinuierlichen Antrieb für die mechanische Abreinigung enthält.

19. Vorrichtung nach einem der Ansprüche 11 bis 18, wobei das Austragsorgan (25; 57; 86) zumindest ein Sieb enthält, dessen Öffnungen in wenigstens einer Dimension mindestens 1,2 bis 10 mal so groß, bevorzugt 1,5 bis 5 mal und besonders bevorzugt 1,8 bis 4 mal so groß sind wie die Spalte bzw. Löcher des feinsten Filterelementes, mit dem die Filter (16; 48; 79) bestückt sind.

20. Vorrichtung nach einem der Ansprüche 11 bis 19, wobei das Austragsorgan (25; 57; 86) zumindest ein Sieb enthält, dessen Lochquerschnitte in wenigstens einer Dimension zwischen 0,03 mm bis 1 mm, vorzugsweise zwischen 0,07 und 0,7 mm und besonders bevorzugt zwischen 0,3 mm und 0,5 mm groß sind.

21. Vorrichtung nach einem der Ansprüche 11 bis 20, wobei zumindest zwei in Strömungsrichtung aufeinanderfolgende Siebe des Austragsorgans (25; 57; 86) so zueinander angeordnet sind, dass kein Loch des in Strömungsrichtung hinteren Siebes in Flucht zu einem Loch des in Strömungsrichtung vorderen Siebes liegt.

22. Vorrichtung nach einem der Ansprüche 11 bis 21, wobei die Leitung (33; 64; 93) zwischen dem Hauptmischer (23; 55; 84) und dem Austragsorgan (25; 57; 86) ein einstellbares Drosselelement (24; 56; 85) enthält.

23. Vorrichtung nach einem der Ansprüche 11 bis 22, wobei die Vorrichtung zur Beimischung des Füllstoffs einen Vormischer (76) und eine als Verdichtungsschnecke ausgestaltete Speiseschnecke (75) beinhaltet.

24. Vorrichtung nach einem der Ansprüche 11 bis 23, wobei die Vorrichtung zur Beimischung des Füllstoffs einen Behälter mit Rührwerk (10, 43) beinhaltet.

## Claims

1. Process for the continuous production of polyurethane foams using CO₂ as blowing agent and with addition of fillers, where
(a) the filler is mixed with at least one of the reactive components polyol or isocyanate or a partial amount of one of the reactive components and this mixture is, either directly during mixing or subsequent to the mixing-in of the filler, subjected to shear rates of from 10 000 s⁻¹ to 200 000 s⁻¹, as a result of which virtually complete dispersion of the filler in the reactive component is achieved, so that a virtually agglomerate-free mixture is subsequently present, and
(b) this filler-containing mixture is passed through at least one filter (16, 48, 79) and oversize particles, residual agglomerates and/or impurities are filtered off, and
(c) the CO₂ is added under pressure to one of the reactive components or a substream of one of the reactive components or the filler-containing mixture to produce a mixture containing liquid CO₂ or a mixture containing liquid CO₂ and filler, and
(d) the CO₂-containing mixture and the filler-containing mixture or the mixture containing liquid CO₂ and filler are mixed with the other reactive component and optionally further additives and the reactive mixture containing CO₂ and filler is subsequently depressurized and divided into a plurality of individual streams at shear rates above 500 s⁻¹ and the flow velocities generated thereby are reduced before discharge, and
(e) the reactive mixture is applied to a substrate and cured to form a polyurethane foam, **characterized in that** the filter (16, 48, 79) is a filter cascade consisting at least of a one-dimensional filtering element and a two-dimensional filtering element composed of a perforated film having round, square or hexagonal hole cross sections, where the two elements are mechanically cleaned at least at intervals, where the two-dimensional filtering element is arranged downstream of the one-dimensional filtering element and where the one-dimensional filtering element has finer openings than the two-dimensional filtering element.

2. Process according to Claim 1, wherein at least one of the filters (16, 48, 79) used for filtering the filler-containing mixture is continuously mechanically cleaned.

3. Process according to Claim 2, wherein the two-dimensional filtering filter (16, 48, 79) is continuously mechanically cleaned.

4. Process according to any of Claims 1 to 3, wherein the finest filter stage is coarser by a factor of from 1 to 10, preferably by a factor of from 1.2 to 7 and particularly preferably by a factor of from 1.5 to 5, than the dimension of the upper section.

5. Process according to any of Claims 1 to 4, wherein the CO₂-containing mixture and the filler-containing mixture are mixed with one another before mixing with the other reactive component.

6. Process according to any of Claims 1 to 5, wherein the pressure of the mixture containing the CO₂ and filler is reduced.

7. Process according to any of Claims 1 to 6, wherein the pressure of the reactive mixture is reduced by means of an adjustable throttling device (24, 56, 85) before it enters the discharge device.

8. Process according to any of Claims 1 to 7, wherein the filler is continuously introduced by means of a feeder screw into a premixer and is mixed with the reactive component there, with the pressure in this premixing zone being kept virtually constant.

9. Process according to any of Claims 1 to 7, wherein the filler is drawn into the reactive component by means of subatmospheric pressure.

10. Process according to either Claim 8 or 9, wherein the filler is blanketed with CO₂ before mixing with the reactive component, so that at least part of the air surrounding the filler is replaced by CO₂.

11. Process according to any of Claims 1 to 10, wherein the filler is presieved before mixing into one of the reactive components.

12. Apparatus for the continuous production of polyurethane foams, which comprises stock vessels (1, 2, 3, 4; 34, 35, 36, 37; 65, 66, 67, 68) and feed devices (5, 6, 7, 8; 38, 39, 40, 41; 69, 70, 71, 72) for the components isocyanate, polyols, additives and liquid carbon dioxide, a main mixer (23; 55; 84) for mixing the isocyanate component and the polyol components and also conduits between the stock vessels (1, 2, 3, 4; 34, 35, 36, 37; 65, 66, 67, 68) and the main mixer (23; 55, 84) and also at least one vessel for accommodating or storing the filler (11; 44; 74), an apparatus for mixing the filler (10; 43; 76) into the isocyanate component or the polyol component and an apparatus for comminuting agglomerates (12, 46, 77),
(a) where the conduit (31, 63, 92) for the transport of the filler-containing mixture contains at least one filter (16, 48, 79), and
(b) where a conduit (28; 60; 89) coming from the CO₂ stock vessel (3; 36; 67) opens into at least one conduit (27; 59; 88) for the isocyanate component or the polyol component leading from one of the stock vessels (2; 35; 66) to the main mixer (23; 55; 84) and where a mixing device (19; 51; 80) for mixing the CO₂ into the reactive component and dissolving the CO₂ into the reaction component is arranged in the conduit section (270; 590; 880) between this opening and the main mixer (23; 55; 84), and
(c) where a discharge device (25; 57; 86) which generates a pressure step and contains at least one fine sieve is arranged downstream of the main mixer (23; 55; 84), **characterized in that** the filter is a filter cascade (16; 48, 79) consisting of a one-dimensional filtering element and a two-dimensional filtering element composed of a perforated film having round, square or hexagonal hole cross sections, where the two elements are mechanically cleaned at least at intervals, where the two-dimensional filtering element is arranged downstream of the one-dimensional filtering element and where the one-dimensional filtering element has finer openings than the two-dimensional filtering element.

13. Apparatus according to Claim 12, wherein the apparatus for comminuting agglomerates (12; 46; 77) is based on the rotor-stator principle.

14. Apparatus according to Claim 12, wherein the apparatus for comminuting agglomerates (12; 46; 77) contains at least one nozzle or orifice plate.

15. Apparatus according to any of Claims 12 to 14, wherein at least one filter (16; 48; 79) contains a device for mechanical cleaning.

16. Apparatus according to Claim 15, wherein at least one filter (16; 48; 79) contains a continuous drive for the mechanical cleaning.

17. Apparatus according to Claim 12, wherein at least one filter (16; 48; 79) having a two-dimensional filtering filter element contains a device for mechanical cleaning.

18. Apparatus according to Claim 17, wherein at least one filter (16; 48; 79) having a two-dimensional filtering filter element and a device for mechanical cleaning contains a continuous drive for the mechanical cleaning.

19. Apparatus according to any of Claims 12 to 18, wherein the discharge device (25; 57; 86) contains at least one sieve whose openings are, in at least one dimension, at least from 1.2 to 10 times as large, preferably from 1.5 to 5 times and particularly preferably from 1.8 to 4 times as large, as the slits or holes of the finest filter element with which the filters (16; 48; 79) are equipped.

20. Apparatus according to any of Claims 12 to 19, wherein the discharge device (25; 57; 86) contains at least one sieve whose hole cross sections have a size in at least one dimension of from 0.03 mm to 1 mm, preferably from 0.07 to 0.7 mm and particularly preferably from 0.3 mm to 0.5 mm.

21. Apparatus according to any of Claims 12 to 20, wherein at least two sieves of the discharge device (25; 57; 86) which follow one another in the flow direction are arranged relative to one another so that no hole of the downstream sieve is aligned with a hole of the upstream sieve.

22. Apparatus according to any of Claims 12 to 21, wherein the conduit (33; 64; 93) between the main mixer (23; 55; 84) and the discharge device (25; 57; 86) contains an adjustable throttling element (24; 56; 85).

23. Apparatus according to any of Claims 12 to 22, wherein the apparatus for mixing in the filler comprises a premixer (76) and a feed screw (75) configured as a compacting screw.

24. Apparatus according to any of Claims 12 to 23, wherein the apparatus for mixing in the filler comprises a vessel equipped with a stirrer (10, 43).

## Revendications

1. Procédé de fabrication continue de mousses de polyuréthane utilisant du CO₂ en tant qu'agent gonflant et avec ajout de charges, selon lequel
(a) la charge est mélangée avec au moins un des composants réactifs polyol ou isocyanate ou avec une partie d'un des composants réactifs, et ce mélange est exposé à des vitesses de cisaillement comprises entre 10 000 s⁻¹ et 200 000 s⁻¹ soit directement lors du mélange, soit après le mélange, une dissociation pratiquement complète de la charge dans le composant réactif étant ainsi obtenue, de manière à obtenir un mélange pratiquement exempt d'agglomérat, et
(b) ce mélange contenant une charge est passé au travers d'un filtre (16, 48, 79) et les particules surdimensionnées, les agglomérats résiduels et/ou les impuretés sont éliminés par filtration, et
(c) le CO₂ est introduit sous pression dans un des composants réactifs ou dans un courant partiel d'un des composants réactifs ou dans le mélange contenant une charge, pour former un mélange contenant du CO₂ liquide ou un mélange contenant du CO₂ liquide et une charge, et
(d) le mélange contenant du CO₂ et le mélange contenant une charge ou le mélange contenant du CO₂ liquide et une charge sont mélangés avec l'autre composant réactif et éventuellement des additifs supplémentaires, et le mélange réactif contenant du CO₂ et une charge est ensuite détendu par division en une pluralité de courants individuels à des vitesses de cisaillement supérieures à 500 s⁻¹, et les vitesses d'écoulement ainsi générées sont réduites avant le déchargement, et
(e) le mélange réactif est appliqué sur un substrat et durci en une mousse de polyuréthane,
**caractérisé en ce que**
le filtre (16, 48, 79) est une cascade de filtration, constituée au moins d'un élément filtrant monodimensionnel et d'un élément filtrant bidimensionnel en un film poreux ayant des sections de pore rondes, quadratiques ou hexagonales, les deux éléments étant nettoyés mécaniquement au moins à intervalles temporels, l'élément filtrant bidimensionnel étant placé en aval de l'élément filtrant monodimensionnel et l'élément filtrant monodimensionnel présentant des ouvertures plus fines que l'élément filtrant bidimensionnel.

2. Procédé selon la revendication 1, dans lequel au moins un des filtres (16, 48, 79) utilisés pour la filtration du mélange contenant une charge est nettoyé mécaniquement en continu.

3. Procédé selon la revendication 2, dans lequel le filtre bidimensionnel (16, 48, 79) est nettoyé mécaniquement en continu.

4. Procédé selon l'une quelconque des revendications 1 à 3, dans lequel l'étape de filtration la plus fine est plus grande d'un facteur de 1 à 10, de préférence d'un facteur de 1,2 à 7 et de manière particulièrement préférée d'un facteur de 1,5 à 5, que la coupe supérieure.

5. Procédé selon l'une quelconque des revendications 1 à 4, dans lequel le mélange contenant du CO₂ et le mélange contenant une charge sont mélangés l'un avec l'autre avant le mélange avec l'autre composant réactif.

6. Procédé selon l'une quelconque des revendications 1 à 5, dans lequel la pression du mélange contenant du CO₂ et une charge est réduite.

7. Procédé selon l'une quelconque des revendications 1 à 6, dans lequel la pression du mélange réactif est réduite avant l'entrée dans l'organe de déchargement à l'aide d'un organe d'étranglement ajustable (24, 56, 85).

8. Procédé selon l'une quelconque des revendications 1 à 7, dans lequel la charge est introduite en continu dans un prémélangeur au moyen d'une vis d'alimentation et y est mélangée avec le composant réactif, la pression dans cette zone de prémélange étant maintenue pratiquement constante.

9. Procédé selon l'une quelconque des revendications 1 à 7, dans lequel la charge est aspirée dans le composant réactif par une sous-pression.

10. Procédé selon l'une quelconque des revendications 8 ou 9, dans lequel la charge est aspergée avec du CO₂ avant le mélange avec le composant réactif de manière à ce qu'au moins une partie de l'air entourant la charge soit remplacée par du CO₂.

11. Procédé selon l'une quelconque des revendications 1 à 10, dans lequel la charge est prétamisée avant l'incorporation dans un des composants réactifs.

12. Dispositif de fabrication continue de mousses de polyuréthane contenant des contenants de stockage (1, 2, 3, 4 ; 34, 35, 36, 37 ; 65, 66, 67, 68) et des dispositifs de transport (5, 6, 7, 8 ; 38, 39, 40, 41 ; 69, 70, 71, 72) pour les composants isocyanate, polyols, additifs et dioxyde de carbone liquide, un mélangeur principal (23 ; 55 ; 84) pour le mélange du composant isocyanate et des composants polyol, ainsi que des conduites entre les contenants de stockage (1, 2, 3, 4 ; 34, 35, 36, 37 ; 65, 66, 67, 68) et le mélangeur principal (23 ; 55 ; 84), ainsi qu'au moins un contenant pour la réception ou le stockage de la charge (11 ; 44 ; 74), un dispositif pour l'incorporation de la charge (10 ; 43 ; 76) dans le composant isocyanate ou polyol, et un dispositif pour le broyage des agglomérats (12, 46, 77),
(a) la conduite (31, 63, 92) pour le transport du mélange contenant une charge contenant au moins un filtre (16, 48, 79) et
(b) une conduite d'alimentation (28 ; 60 ; 89) qui arrive du contenant de stockage du CO₂ (3 ; 36 ; 67) débouchant dans au moins une conduite qui mène d'un des contenants de stockage (2 ; 35 ; 66) pour le composant isocyanate ou polyol vers le mélangeur principal (23 ; 55 ; 84), et un dispositif de mélange (19 ; 51 ; 80) pour l'incorporation et la dissolution du CO₂ dans le composant réactif étant placé dans la section de conduite (270 ; 590 ; 880) comprise entre cette embouchure et le mélangeur principal (23 ; 55 ; 84), et (c) un organe de déchargement (25 ; 57 ; 86) qui génère un saut de pression, qui contient au moins un tamis à mailles fines, étant placé après le mélangeur principal (23 ; 55 ; 84),
**caractérisé en ce que**
le filtre (16, 48, 79) est une cascade de filtration, constituée d'un élément filtrant monodimensionnel et d'un élément filtrant bidimensionnel en un film poreux ayant des sections de pore rondes, quadratiques ou hexagonales, les deux éléments étant nettoyés mécaniquement au moins à intervalles temporels, l'élément filtrant bidimensionnel étant placé en aval de l'élément filtrant monodimensionnel et l'élément filtrant monodimensionnel présentant des ouvertures plus fines que l'élément filtrant bidimensionnel.

13. Dispositif selon la revendication 12, dans lequel le dispositif pour le broyage des agglomérats (12 ; 46 ; 77) est fondé sur le principe rotor-stator.

14. Dispositif selon la revendication 12, dans lequel le dispositif pour le broyage des agglomérats (12 ; 46 ; 77) contient au moins une buse ou une ouverture.

15. Dispositif selon l'une quelconque des revendications 12 à 14, dans lequel au moins un filtre (16 ; 48 ; 79) contient un dispositif pour le nettoyage mécanique.

16. Dispositif selon la revendication 15, dans lequel au moins un filtre (16 ; 48 ; 79) contient un mécanisme d'entraînement continu pour le nettoyage mécanique.

17. Dispositif selon la revendication 12, dans lequel au moins un filtre (16 ; 48 ; 79) à élément de filtration bidimensionnel contient un dispositif pour le nettoyage mécanique.

18. Dispositif selon la revendication 17, dans lequel au moins un filtre (16 ; 48 ; 79) à élément de filtration bidimensionnel et à dispositif pour le nettoyage mécanique contient un mécanisme d'entraînement continu pour le nettoyage mécanique.

19. Dispositif selon l'une quelconque des revendications 12 à 18, dans lequel l'organe de déchargement (25 ; 57 ; 86) contient au moins un tamis dont les ouvertures sont au moins 1,2 à 10 fois plus grandes, de préférence 1,5 à 5 fois et de manière particulièrement préférée 1,8 à 4 fois plus grandes, dans au moins une dimension, que les fentes ou les pores de l'élément de filtration le plus fin dont les filtres (16 ; 48 ; 79) sont équipés.

20. Dispositif selon l'une quelconque des revendications 12 à 19, dans lequel l'organe de déchargement (25 ; 57 ; 86) contient au moins un tamis dont les sections de pore ont une taille comprise entre 0,03 mm et 1 mm, de préférence entre 0,07 et 0,7 mm et de manière particulièrement préférée entre 0,3 mm et 0,5 mm, dans au moins une dimension.

21. Dispositif selon l'une quelconque des revendications 12 à 20, dans lequel au moins deux tamis successifs dans la direction de l'écoulement de l'organe de déchargement (25 ; 57 ; 86) sont placés l'un par rapport à l'autre de manière à ce qu'aucun pore du tamis arrière dans la direction de l'écoulement ne soit aligné avec un pore du tamis avant dans la direction de l'écoulement.

22. Dispositif selon l'une quelconque des revendications 12 à 21, dans lequel la conduite (33 ; 64 ; 93) entre le mélange principal (23 ; 55 ; 84) et l'organe de déchargement (25 ; 57 ; 86) contient un élément d'étranglement ajustable (24 ; 56 ; 85).

23. Dispositif selon l'une quelconque des revendications 12 à 22, dans lequel le dispositif pour l'incorporation de la charge contient un prémélangeur (76) et une vis d'alimentation (75) conçue sous la forme d'une vis de compression.

24. Dispositif selon l'une quelconque des revendications 12 à 23, dans lequel le dispositif pour l'incorporation de la charge contient un contenant avec agitateur (10, 43).
